# EUROPÄISCHE PATENTSCHRIFT

(11) **EP 2 713 407 B1**
(45) Veröffentlichungstag und Bekanntmachung des Hinweises auf die Patenterteilung: **01.02.2017**
(21) Anmeldenummer: 13004514.9
(22) Anmeldetag: 16.09.2013
(51) Int. Cl.: H01L 31/052

(54) **Set zum Nachrüsten an einem Photovoltaikmodul**
Set for retrofitting to a photovoltaic module
Ensemble de rééquipement d'un module photovoltaïque

(30) Priorität: 26.09.2012 AT 10472012
(43) Veröffentlichungstag der Anmeldung: 02.04.2014
(73) Patentinhaber: Lenz, Bernhard, 6858 Schwarzach (AT)
(72) Erfinder: Lenz, Bernhard, 6858 Schwarzach (AT)
(74) Vertreter: Fechner, Thomas

(56) Entgegenhaltungen:
- DE-A1-102010 032 908
- DE-U1-202007 010 901
- DE-U1-202008 004 965
- US-A1- 2009 065 046

## Beschreibung

Die vorliegende Erfindung betrifft ein Set gemäß des Oberbegriffs des Patentanspruchs 1.

Bei Photovoltaikmodulen zur Erzeugung von elektrischem Strom aus Licht, insbesondere Sonnenlicht, ist es bekannt, dass der Wirkungsgrad der Photovoltaikmodule bei zunehmender Erhitzung abnimmt. Es ist auch grundsätzlich bekannt, dass ein höherer Stromertrag erzielt wird, wenn Photovoltaikmodule gekühlt werden.

Trotzdem existiert am Markt und auch beim Endnutzer noch eine Vielzahl von Photovoltaikmodulen, bei denen keine Kühlung vorgesehen ist.

Die DE 10 2010 032 908 A1 offenbart einen Kühlkörper, welcher mittels Schrauben, Klammern, Federn etc. an einem Photovoltaikmodul befestigt wird, wobei diese direkt im umlaufenden Rahmen von bestehenden Photovoltaikmodulen angeordnet sind. Die DE 20 2007 010 901 U1 zeigt einen Kühlkörper, welcher mittels Streben und Federn an einem Photovoltaikmodul befestigbar ist. In der DE 20 2008 004 965 U1 sind Federstahlelemente oder Überstände des Rahmens des Photovoltaikmoduls genannt, mit denen der Kühlkörper randseitig am Rahmen eines Photovoltaikmoduls befestigt wird. Als Alternative werden über die Mitte einer Thermoelementplatte verlaufende Fixierelemente genannt, ohne dass deren Aufbau und Struktur beschrieben ist. Die gattungsbildende US 2009/0065046 A1 offenbart ein Solarmodul mit einem flachen Wärmetauscher, welcher mit starren oder flexiblen Bändern bzw. Schienen am Solarmodul befestigt wird.

Aufgabe der Erfindung ist es, eine alternative Möglichkeit vorzuschlagen, wie bei bereits existierenden Photovoltaikmodulen eine Kühlung ermöglicht werden kann, ohne dass dabei in die Garantiebestimmungen des Herstellers eingegriffen wird.

Zur Lösung dieser Aufgabe schlägt die Erfindung ein Set gemäß des Patentanspruchs 1 vor.

Es handelt sich bei der Erfindung somit um ein Set, welches eine Nachrüstung zumindest eines Kühlkörpers an handelsüblichen Photovoltaikmodulen ermöglicht. Durch die klemmende Befestigung des Kühlkörpers am Photovoltaikmodul mittels der Klemmvorrichtung in Form der genannten Klemmschiene bzw. der Klemmvorrichtungen kommt es weder bei der Montage noch beim Betrieb des Photovoltaikmoduls zu einer mechanischen Veränderung an demselben. Somit wird auch nicht in die Garantiebestimmungen des Herstellers des Photovoltaikmoduls eingegriffen. Außerdem kann der Kühlkörper jederzeit wieder entfernt werden und das Photovoltaikmodul damit wieder in den Originalzustand zurückversetzt werden.

Beim Kühlkörper kann es sich z.B. um einen Wärmetauscher, vorzugsweise einen Flächenwärmetauscher, handeln. Bei solchen Ausgestaltungsformen ist es möglich, die zur Kühlung des Photovoltaikmoduls von diesem abgenommene Wärme gleichzeitig als thermische Energiequelle zu verwenden, z.B. um Warmwasser zu erzeugen oder dergleichen. Unter Verwendung dieses Wärmetauscherprinzips ist es somit möglich, thermische Energie zu gewinnen und für eine anderweitige Nutzung zur Verfügung zu stellen und gleichzeitig den Wirkungsgrad der Photovoltaikmodule zu erhöhen. Um am Photovoltaikmodul keinerlei mechanische Veränderungen durchführen zu müssen, sehen besonders bevorzugte Ausgestaltungsformen der Erfindung vor, dass die Klemmvorrichtung ausschließlich klemmend am Photovoltaikmodul, vorzugsweise an einem Rahmen des Photovoltaikmoduls, befestigbar ist. Es kann nur eine Klemmvorrichtung vorgesehen sein. In der Regel wird der Kühlkörper aber mittels mehrerer Klemmvorrichtungen am Photovoltaikmodul befestigt. Als Klemmvorrichtung werden die oben genannten elastisch deformierbaren Klemmschienen verwendet. Es kann sich somit um Profilschienen mit hutförmigem Querschnitt, vorzugsweise aus Metall, aber auch um Aufbauten aus mehreren Komponenten wie z.B. einer Profilschiene und einem Elastomerkörper handeln. Zur zusätzlichen Sicherung kann die Klemmschiene am Kühlkörper z.B. durch Verschrauben, Annieten oder dergleichen befestigt werden. Hierdurch kommt es nicht zu einer mechanischen Veränderung des Photovoltaikmoduls.

Bevorzugte Ausgestaltungsformen der Erfindung sehen vor, dass der Kühlkörper zumindest eine Kontaktoberfläche zur Anlage am Photovoltaikmodul und zumindest eine, mit der Kontaktoberfläche in wärmeleitendem Kontakt stehende, vorzugsweise rohrförmige, Leitung für zumindest ein Kühlmedium aufweist. Bei der im montierten Zustand dem Photovoltaikmodul zugewandten Kontaktoberfläche des Kühlkörpers handelt es sich günstigerweise um eine Wärmetauscheroberfläche mit hoher Wärmeleitfähigkeit. Es kann sich z.B. um ein Metallblech aus Aluminium oder Kupfer oder einem anderen thermisch leitfähigen Material handeln. Die Leitungen zum Hindurchführen zumindest eines Kühlmediums bestehen bevorzugt aus Metall, wie z.B. Kupfer oder Aluminium. Es kann sich um an sich bekannte Rohrmäander handeln. Es ist aber auch jede andere Form von Leitungsführung im Kühlkörper bzw. eines Durchströmens des Kühlkörpers denkbar. Die Zu- und Abfuhr des Kühlmediums erfolgt günstigerweise über entsprechende Fluidanschlüsse des Kühlkörpers bzw. der genannten Leitungen. Als Kühlmedium kommen vorzugsweise geeignete an sich bekannte Kühlflüssigkeiten zum Einsatz. Grundsätzlich wäre es aber auch denkbar, ein gasförmiges Kühlmedium einzusetzen. Der Kühlkörper weist bevorzugt noch eine, vorzugsweise plattenförmige Rückwand, zum mechanischen Schutz und gegebenenfalls zur thermischen Isolierung bzw. Dämmung auf. Grundsätzlich liegt der Kühlkörper günstigerweise vollflächig am Photovoltaikmodul an.

Besonders bevorzugte Ausgestaltungsformen der Erfindung sehen vor, dass das Set zusätzlich zu den bisher genannten Komponenten zumindest eine Zwischenlage, vorzugsweise ein Gel und/oder eine Paste und/oder einen Elastomerkörper, zum Zwischenlegen zwischen den Kühlkörper und das Photovoltaikmodul aufweist. Die Zwischenlage und verschiedene Ausgestaltungsformen davon werden weiter unten noch im Detail erläutert.

Zusätzlich zum Set betrifft die Erfindung auch eine Anordnung mit einem Photovoltaikmodul und einem erfindungsgemäßen Set, wobei der Kühlkörper mittels der Klemmvorrichtung klemmend am Photovoltaikmodul gehalten ist. Bei diesen erfindungsgemäßen Anordnungen ist günstigerweise vorgesehen, dass das Photovoltaikmodul eine für den Lichteinfall vorgesehene Vorderseite und eine dazu gegenüberliegend angeordnete Rückseite aufweist, wobei der Kühlkörper in wärmeleitendem Kontakt an der Rückseite des Photovoltaikmoduls angeordnet ist. Bei der Anordnung ist die Klemmvorrichtung, wie bereits ausgeführt, vorzugsweise ausschließlich, klemmend am Photovoltaikmodul befestigt. Besonders bevorzugte Ausgestaltungsformen sehen vor, dass die Klemmvorrichtung klemmend an einem Rahmen des Photovoltaikmoduls befestigt ist. Der Rahmen kann hierzu, z.B. indem er einen C-förmigen Querschnitt hat, Hinterschnitte aufweisen. In diese Hinterschnitte können die Klemmvorrichungen, insbesondere in Form von Klemmschienen, eingreifen.

Bei einer solchen erfindungsgemäßen Anordnung ist bevorzugt vorgesehen, dass, zumindest, vorzugsweise genau, eine Zwischenlage, vorzugsweise eine Schicht Gel und/oder eine Schicht Paste und/oder ein Elastomerkörper bzw. eine Elastomermatte, zwischen dem Kühlkörper und dem Photovoltaikmodul, vorzugsweise vollflächig, angeordnet ist. Bei dem Gel kann es sich um ein permanentviskoses Mittel handeln. Es sind aber auch Gelarten verwendbar, welche dann zu einer gummiartigen bzw. elastischen Masse aushärten. Es kann sich bei der Zwischenlage auch von vorn herein um einen Elastomerkörper, vorzugsweise eine Elastomermatte, mit entsprechenden thermischen Eigenschaften zur Wärmeübertragung handeln. Weitere Alternativen für die Ausbildung der Zwischenlage stellen Pasten, insbesondere Wärmeleitpasten, graphithaltige Pasten oder dergleichen, dar. Natürlich können diese beispielhaft genannten Arten der Zwischenlage auch miteinander kombiniert eingesetzt werden. Günstigerweise werden Zwischenlagen gewählt, welche zwar ein gewisses Anhaften des Kühlkörpers am Photovoltaikmodul bzw. dessen Rückseite erzeugen. Dieses Anhaften unterstützt dann sozusagen die klemmende Befestigung des Kühlkörpers am Photovoltaikmodul mittels der Klemmvorrichtungen. In bevorzugten Ausgestaltungsformen ist aber nicht vorgesehen, dass mittels der Zwischenlage eine Klebeverbindung geschaffen wird, welche dann nicht mehr ohne Beschädigung bzw. Zerstörung des Photovoltaikmoduls von diesem gelöst werden kann. Es können z.B. Gele verwendet werden, welche auch in einem zu einer gummiartigen Substanz ausgehärteten Zustand noch ein beschädigungsfreies Lösen, vorzugsweise von Hand, des Kühlkörpers vom Photovoltaikmoduls erlauben.

Der Kühlkörper liegt bevorzugt mittels der Zwischenlage schwimmend am Photovoltaikmodul an. Auch durch diese Zwischenlage erfolgt am Photovoltaikmodul keine mechanische Veränderung.

Die Zwischenlage kann verschiedene Funktionen bzw. Vorteile haben. Erstens kann sie die Wärmeübertragung zwischen Photovoltaikmodul und Kühlkörper fördern bzw. verbessern, außerdem kann sie dem Ausgleich von Unebenheiten der beiden Auflageflächen dienen. Darüber hinaus kann sie unterschiedliche Wärmeausdehnungen des Kühlkörpers und des Photovoltaikmoduls ausgleichen. Ein wesentlicher Vorteil der Zwischenlage ist aber, dass sie eine direkte Reibung zwischen Photovoltaikmodul und Kühlkörper und damit eine mögliche Beschädigung des Photovoltaikmoduls, z.B. verursacht durch unterschiedliche thermische Ausdehnung, verhindert. Außerdem kann die genannte Zwischenschicht bzw. Zwischenlage auch die Bildung und Ablagerung von Kondenswasser zwischen Photovoltaikmodul und Kühlkörper verhindern, insbesondere indem sie Luftspalte zwischen Photovoltaikmodul und Kühlkörper verhindert. Die Zwischenlage weist günstigerweise eine Wärmeleitfähigkeit von zumindest 0,5 W/mK (Watt pro Meter und Kelvin) auf. Es kann sich z.B. um ein Silikongel, insbesondere um ein Zweikomponentensilikongel, handeln. Dieses kann zwischen Kühlkörper und Photovoltaikmodul zu einem Silikongummi mit geringer Oberflächenhaftung aushärten. Schichtstärken der Zwischenlage liegen günstigerweise zwischen 0,1 mm und 1 mm. Die Zwischenlage weist günstigerweise eine Temperaturbeständigkeit von -30° bis 180° C auf. Ihre Reißdehnung beträgt günstigerweise mindestens 100% bis maximal 300%. Die Zugfähigkeit dieser Zwischenlage liegt günstigerweise zwischen 1 bis 30 N/mm². Die Reißfestigkeit liegt günstigerweise ebenfalls zwischen 1 und 30 N/mm².

Neben dem Set und der Anordnung betrifft die Erfindung auch ein Verfahren zur Nachrüstung eines Photovoltaikmoduls, wobei an dem Photovoltaikmodul mit Hilfe eines erfindungsgemäßen Sets zumindest ein Kühlkörper mittels zumindest einer Klemmvorrichtung klemmend am Photovoltaikmodul befestigt wird. Bei diesem Verfahren zur Nachrüstung zumindest eines Kühlkörpers am Photovoltaikmodul ist günstigerweise vorgesehen, dass am Photovoltaikmodul, vorzugsweise an der Rückseite des Photovoltaikmoduls und/oder am Kühlkörper, vorzugsweise an dessen Kontaktoberfläche, die genannte Zwischenlage aufgetragen bzw. angeordnet wird. Vorab können, soweit notwendig, entsprechende Reinigungsschritte der beteiligten Oberflächen durchgeführt werden. Nach Auftragung bzw. Anordnen der Zwischenlage wird der Kühlkörper, vorzugsweise mit seiner Kontaktoberfläche, am Photovoltaikmodul, vorzugsweise an dessen Rückseite, angelegt. Anschließend oder auch während dieses letztgenannten Schrittes erfolgt die klemmende Befestigung des Kühlkörpers am Photovoltaikmodul mittels der Klemmvorrichtung bzw. mehrerer Klemmvorrichtungen. Weitere Details des Verfahrens lassen sich aus den obigen und nachfolgenden Schilderungen zum erfindungsgemäßen Set und der erfindungsgemäßen Anordnung ableiten. Das gleiche gilt für das Set und die Anordnung natürlich auch.

Weitere Merkmale und Einzelheiten bevorzugter Varianten der Erfindung werden nachfolgend anhand eines Ausführungsbeispiels geschildert. Dabei zeigen:
Fig. 1 eine Ansicht auf die Rückseite einer erfindungsgemäßen Anordnung;
Fig. 2 einen Schnitt durch die erfindungsgemäße Anordnung gemäß Fig. 1 entlang der Schnittlinie AA;
Fig. 3 den Bereich B aus Fig. 2 vergrößert;
Fig. 4 das beim Stand der Technik an sich bekannte Photovoltaikmodul;
Fig. 5 den Kühlkörper dieses Ausführungsbeispiels und
Fig. 6 und 7 verschiedene Ausgestaltungsformen von erfindungsgemäßen Klemmvorrichtungen.

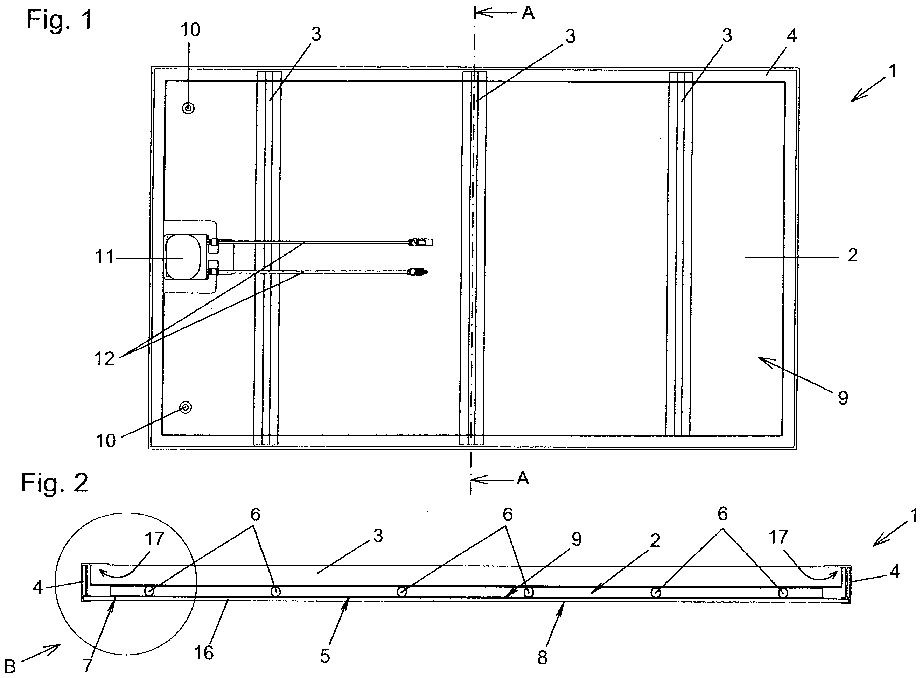

In Fig. 1 ist eine Ansicht auf die Rückseite 9 eines Photovoltaikmoduls 1 gezeigt, an dem der Kühlkörper 2 zum Kühlen des Photovoltaikmoduls 1 nachgerüstet und klemmend mittels der Klemmvorrichtungen 3 befestigt wurde. Der Kühlkörper 2 ist somit an der Rückseite 9 des Photovoltaikmoduls 1 angeordnet ist. Zu sehen sind in Fig. 1 auch die Fluidanschlüsse 10, über die Kühlmedium, also insbesondere Kühlflüssigkeit, durch die hierfür vorgesehenen Leitungen 6 im Kühlkörper 2 hindurchgeführt werden kann. Zu sehen sind auf dieser Rückseite 9 auch der Elektroanschluss 11 und die Kabel 12 des beim Stand der Technik an sich im Handel erhältlichen Photovoltaikmoduls 1.

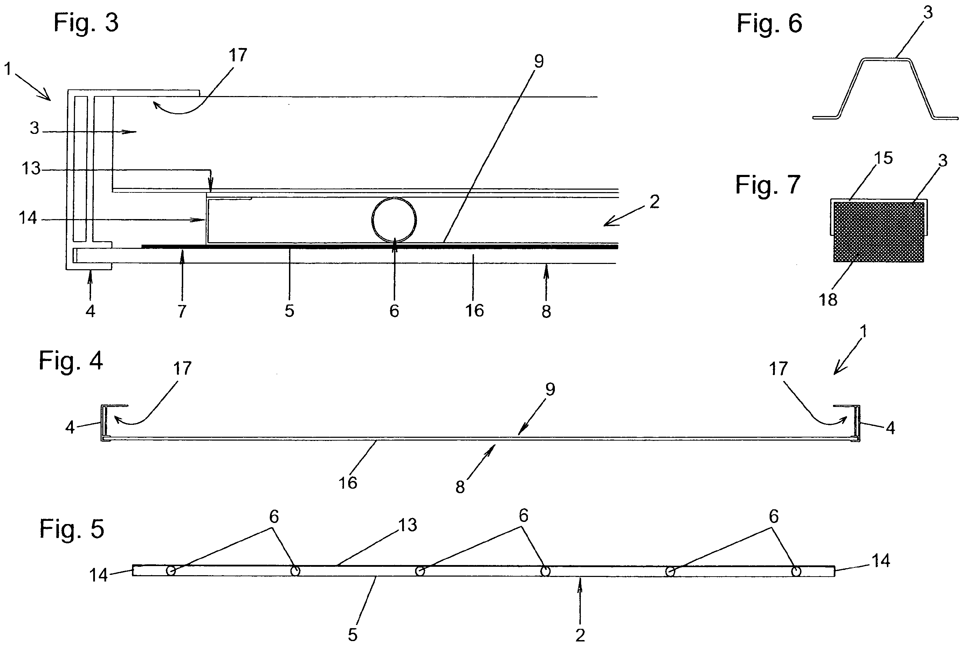

Zu den Figuren sei darauf hingewiesen, dass diese nicht maßstabsgetreu gezeichnet wurden. Es wurden vielmehr Darstellungen gewählt, in denen die jeweils zu zeigenden Merkmale besonders gut sichtbar sind. Während Fig. 2 den Schnitt entlang der Schnittlinie AA durch die erfindungsgemäße Anordnung zeigt, bei der der Kühlkörper 2 mittels der Klemmvorrichtung 3 am Photovoltaikmodul 1 gehalten ist, stellt Fig. 4 einen entsprechenden Schnitt durch das Photovoltaikmoduls 1 alleine, so wie es im Handel erhältlich ist, also ohne Kühlung dar. Fig. 5 zeigt den Kühlkörper 2 des hier dargestellten erfindungsgemäßen Sets alleine. In den Fig. 6 und 7 sind Querschnitte durch erfindungsgemäße Ausgestaltungsformen von schienenförmigen Klemmvorrichtungen 3 für ein solches Set gezeigt. In Fig. 6 handelt es sich um den Querschnitt durch eine hutförmige Schiene, welche aus entsprechend elastischem Material wie z.B. Metall gefertigt sein kann. In Fig. 7 werden die zum Andrücken des Kühlkörpers 2 benötigten elastischen Eigenschaften der Klemmvorrichtung 3 durch einen Elastomerkörper 18 bereitgestellt. Der Elastomerkörper 18 ist in einer Trägerschiene 15 der Klemmvorrichtung 3 gelagert. Es wäre auch möglich, dass der Kühlkörper 2 und/oder die Zwischenlage 7 die zur klemmenden Befestigung am Photovoltaikmodul 1 benötigten elastischen Eigenschaften teilweise zur Verfügung stellt.

Das im Handel erhältliche Photovoltaikmodul 1, wie es im Schnitt in Fig. 4 dargestellt ist, weist zunächst einmal eine Photovoltaikplatte 16 auf. Diese trägt, wie an sich bekannt, die eigentlichen Photovoltaikzellen, welche das Licht in elektrischen Strom umwandeln. Es kann sich bei der Photovoltaikplatte 16 z.B. um ein Laminat mit einer Glasplatte und einem sogenannten Backsheet, welches die Photovoltaikzellen aufweist, handeln. Die Vorderseite 8 dieser Photovoltaikplatte 16 bzw. des Photovoltaikmoduls 1 wird dem Licht bzw. Sonnenlicht zugewendet. Der Vorderseite 8 gegenüber liegt die Rückseite 9, an der bevorzugt der Kühlkörper 2 des erfindungsgemäßen Sets bzw. der erfindungsgemäßen Anordnung angeordnet wird. Im gezeigten Ausführungsbeispiel ist die Photovoltaikplatte 16 von einem Rahmen 4 des Photovoltaikmoduls 1 umgeben. Bei dem Rahmen 4 kann es sich z.B. um geeignete Metallprofile oder dergleichen handeln. Üblicherweise weisen diese Rahmen 4 bzw. das Photovoltaikmodul 1 Hinterschnitte 17 auf, welche zur Verankerung bzw. Abstützung der Klemmvorrichtung 3 genutzt werden können. Im gezeigten Ausführungsbeispiel weist das Photovoltaikmodul 1 im Bereich der Rahmen 4 einen C-förmigen Querschnitt auf, um diese Hinterschnitte 17 auszubilden.

Fig. 5 zeigt ein Ausführungsbeispiel eines Kühlkörpers 2 eines erfindungsgemäßen Sets bzw. einer erfindungsgemäßen Anordnung im Schnitt entlang der Schnittlinie AA. Der hier dargestellte Kühlkörper 2 weist eine zum Anlegen an das Photovoltaikmodul 1 bzw. dessen Rückseite 9 vorgesehene Kontaktoberfläche 5 auf. Wie eingangs erläutert, kann es sich hierbei bevorzugt um ein gut wärmeleitfähiges Blech oder dergleichen handeln. In gut wärmeleitfähigem Kontakt zu dieser Kontaktoberfläche 5 stehen die Leitungen 6, durch die das Wärmeträgerfluid hindurch geführt wird, um die auf den Kühlkörper 2 übertragene Wärme des Photovoltaikmoduls aufzunehmen und abzutransportieren und gegebenenfalls einer weiteren Nutzung zuzuführen. Im gezeigten Ausführungsbeispiel sind die Leitungen 6 in einem Hohlraum angeordnet, welcher von der Kontaktoberfläche 5, den Seitenwänden 14 und der Rückwand 13 des Kühlkörpers 2 gebildet wird. Dies ist natürlich nur ein Beispiel einer möglichen Ausgestaltungsform eines Kühlkörpers 2. Der Vollständigkeit halber sei darauf hingewiesen, dass natürlich auch andere Arten von Kühlkörpern 2 zum Einsatz kommen können. Diese können andere Formen der Durchleitung 6 für das Kühlmedium aufweisen. Es können natürlich auch ganz andere Kühlkörper 2 eingesetzt werden, die auch ganz ohne das Durchführen von Kühlmedium funktionieren.

Im vergrößerten Bereich B der Fig. 2, wie er in Fig. 3 dargestellt ist, ist besonders gut der erfindungsgemäße Aufbau der Anordnung bzw. die erfindungsgemäße Verwendung des Sets am Photovoltaikmodul 1 zu sehen. Dargestellt ist, wie der Kühlkörper 6 unter Zwischenlage 7 des Gels mit seiner Kontaktoberfläche 5 an der Rückseite 9 des Photovoltaikmoduls 1 bzw. dessen Photovoltaikplatte 16 vollflächig anliegt. Durch die Zwischenlage 7 aus Gel, welche auch zu einer gummiartigen Schicht aushärten kann oder gleich als Elastomerkörper bzw. -matte oder auch als Paste aufgebracht werden kann, kann bereits ein gewisses Anhaften des Kühlkörpers 2 am Photovoltaikmodul 1 erreicht werden. Die eigentliche Befestigung erfolgt erfindungsgemäß aber durch Festklemmen des Kühlkörpers 2 am Photovoltaikmodul 1 mittels der Klemmvorrichtung 3. Im gezeigten Ausführungsbeispiel handelt es sich bei den Klemmvorrichtungen 3 um die bereits beschriebenen und in Fig. 6 und 7 im Schnitt dargestellten Klemmschienen, welche in die Hinterschnitte 17 eingreifen und über ihre elastischen Eigenschaften und ihre Abstützung am Rahmen 4 des Photovoltaikmoduls 1 den Kühlkörper 2 gegen das Photovoltaikmodul 1 bzw. dessen Photovoltaikplatte 16 drücken und damit dauerhaft dort klemmend befestigen. Als zusätzliche Sicherung kann die Klemmvorrichtung 3 am Kühlkörper 2 z.B. durch Verschraubung noch zusätzlich gesichert sein. Wichtig ist allerdings, dass die Klemmvorrichtung 3, vorzugsweise ausschließlich, klemmend am Photovoltaikmodul 1 befestigt ist, wie dies in diesem Ausführungsbeispiel auch der Fall ist.

Um ein unterschiedlich starkes, thermisch bedingtes Ausdehnen und Zusammenziehen der einzelnen Komponenten der Anordnung zuzulassen, ist es günstig, wenn, wie hier auch realisiert und in Fig. 3 besonders gut zu sehen, seitlich zwischen den Seitenwänden 14 und auch den Klemmvorrichtungen 3 und dem Rahmen 4 bzw. dem Photovoltaikmodul 1 noch Zwischenräume vorgesehen sind.

### Legende zu den Hinweisziffern:

- 1: Photovoltaikmodul
- 2: Kühlkörper
- 3: Klemmvorrichtung
- 4: Rahmen
- 5: Kontaktoberfläche
- 6: Leitung
- 7: Zwischenlage
- 8: Vorderseite
- 9: Rückseite
- 10: Fluidanschluss
- 11: Elektroanschluss
- 12: Kabel
- 13: Rückwand
- 14: Seitenwand
- 15: Trägerschiene
- 16: Photovoltaikplatte
- 17: Hinterschnitt
- 18: Elastomerkörper

## Patentansprüche

1. Set zum Nachrüsten an einem Photovoltaikmodul (1) zur Erzeugung elektrischen Stroms, wobei das Set zumindest einen Kühlkörper (2) zum Kühlen des Photovoltaikmoduls (1) und zumindest eine Klemmvorrichtung (3) zur klemmenden Befestigung des Kühlkörpers (2) am Photovoltaikmodul (1) aufweist, wobei die Klemmvorrichtung (3) eine elastisch deformierbare Klemmschiene ist, **dadurch gekennzeichnet, dass** die Klemmschiene aus elastischem Material gefertigt ist und quer zu ihrer Längserstreckung einen hutförmigen Querschnitt aufweist, oder dass die Klemmschiene zur Bereitstellung der elastischen Eigenschaften einen in einer Trägerschiene (15) der Klemmvorrichtung (3) gelagerten Elastomerkörper (18) aufweist.

2. Set nach Anspruch 1, **dadurch gekennzeichnet, dass** die Klemmvorrichtung (3) ausschließlich klemmend am Photovoltaikmodul (1), vorzugsweise an einem Rahmen (4) des Photovoltaikmoduls (1), befestigbar ist.

3. Set nach Anspruch 1 oder 2, **dadurch gekennzeichnet, dass** der Kühlkörper (2) zumindest eine Kontaktoberfläche (5) zur Anlage am Photovoltaikmodul (1) und zumindest eine, mit der Kontaktoberfläche (5) in wärmeleitendem Kontakt stehende, vorzugsweise rohrförmige, Leitung (6) für zumindest ein Kühlmedium aufweist.

4. Set nach einem der Ansprüche 1 bis 3, **dadurch gekennzeichnet, dass** es zusätzlich zumindest eine Zwischenlage (7), vorzugsweise ein Gel und/oder eine Paste und/oder einen Elastomerkörper, zum Zwischenlegen zwischen den Kühlkörper (2) und das Photovoltaikmodul (1) aufweist.

5. Anordnung mit einem Photovoltaikmodul (1), **dadurch gekennzeichnet, dass** die Anordnung zumindest ein Set nach einem der Ansprüche 1 bis 4 aufweist und der Kühlkörper (2) mittels der Klemmvorrichtung (3) klemmend am Photovoltaikmodul (1) gehalten ist.

6. Anordnung nach Anspruch 5, **dadurch gekennzeichnet, dass** das Photovoltaikmodul (1) eine für den Lichteinfall vorgesehene Vorderseite (8) und eine dazu gegenüberliegend angeordnete Rückseite (9) aufweist, wobei der Kühlkörper (2) in wärmeleitendem Kontakt an der Rückseite (9) des Photovoltaikmoduls (1) angeordnet ist.

7. Anordnung nach Anspruch 5 oder 6, **dadurch gekennzeichnet, dass** die Klemmvorrichtung (3) ausschließlich klemmend am Photovoltaikmodul (1), vorzugsweise an einem Rahmen (4) des Photovoltaikmoduls (1), befestigt ist.

8. Anordnung nach einem der Ansprüche 5 bis 7, **dadurch gekennzeichnet, dass** zumindest eine Zwischenlage (7), vorzugsweise eine Schicht Gel und/oder eine Schicht Paste und/oder ein Elastomerkörper, zwischen dem Kühlkörper (2) und dem Photovoltaikmodul (1), vorzugsweise vollflächig, angeordnet ist.

9. Verfahren zur Nachrüstung eines Photovoltaikmoduls (1), **dadurch gekennzeichnet, dass** an dem Photovoltaikmodul (1) mit Hilfe eines Sets nach einem der Ansprüche 1 bis 4 zumindest ein Kühlkörper (2) mittels zumindest einer Klemmvorrichtung (3) klemmend am Photovoltaikmodul (1) befestigt wird.

## Claims

1. Kit for retrofitting to a photovoltaic module (1) for generating electric current, the kit having at least one heat sink (2) for cooling the photovoltaic module (1) and at least one clamping device (3) for fastening the heat sink (2) to the photovoltaic module (1) by clamping, the clamping device (3) being an elastically deformable clamping rail, **characterised in that** the clamping rail is made of elastic material and comprises a hat-shaped cross-section transverse to its longitudinal extent, or **in that**, to provide the elastic properties, the clamping rail has an elastomeric body (18) mounted in a carrier rail (15) of the clamping device (3).

2. Kit according to claim 1, **characterised in that** the clamping device (3) can be fastened to the photovoltaic module (1), and preferably to a frame (4) of the photovoltaic module (1), solely by clamping.

3. Kit according to claim 1 or 2, **characterised in that** the heat sink (2) has at least one contact-making surface (5) to rest against the photovoltaic module (1) and at least one duct (6), for at least one cooling medium, which is in thermally conductive contact with the contact-making surface (5).

4. Kit according to one of claims 1 to 3, **characterised in that** it has in addition at least one interlayer (7), and preferably a gel and/or a paste and/or an elastomeric body, for insertion between the heat sink (2) and the photovoltaic module (1).

5. Arrangement having a photovoltaic module (1), **characterised in that** the arrangement has at least one kit according to one of claims 1 to 4 and the heat sink (2) is held to the photovoltaic module (1) by clamping by means of the clamping device (3).

6. Arrangement according to claim 5, **characterised in that** the photovoltaic module (1) has a front side (8) intended for the incidence of light and a rear side (9) oppositely arranged thereto, the heat sink (2) being arranged against the rear side (9) of the photovoltaic module (1) in thermally conductive contact therewith.

7. Arrangement according to claim 5 or 6, **characterised in that** the clamping device (3) is fastened to the photovoltaic module (1), and preferably to a frame (4) of the photovoltaic module (1), solely by clamping.

8. Arrangement according to one of claims 5 to 7, **characterised in that** at least one interlayer (7), and preferably a layer of gel and/or a layer of paste and/or an elastomeric body, is arranged between the heat sink (2) and the photovoltaic module (1), preferably to cover the full area in question.

9. Method of retrofitting a photovoltaic module (1), **characterised in that**, with the help of a kit according to one of claims 1 to 4, at least one heat sink (2) is fastened to the photovoltaic module (1) by clamping by means of at least one clamping device (3).

## Revendications

1. Ensemble de modification postérieure pour un module photovoltaïque (1) destiné à générer un courant électrique, dans lequel l'ensemble comprend au moins un corps de refroidissement (2) pour refroidir le module photovoltaïque (1), et au moins un dispositif de blocage (3) pour la fixation bloquée du corps de refroidissement (2) sur le module photovoltaïque (1), le dispositif de blocage (3) étant un rail de blocage déformable élastiquement, **caractérisé en ce que** le rail de blocage est réalisé dans un matériau élastique et présente transversalement à sa longueur une section transversale en forme de chapeau, ou **en ce que** le rail de blocage comprend un corps élastomère (18) logé dans un rail porteur (15) du dispositif de blocage (3) pour lui assurer les propriétés élastiques.

2. Ensemble selon la revendication 1, **caractérisé en ce que** le dispositif de blocage (3) peut être fixé sur le module photovoltaïque (1) uniquement par blocage, de préférence sur un cadre (4) du module photovoltaïque (1).

3. Ensemble selon la revendication 1 ou 2, **caractérisé en ce que** le corps de refroidissement (2) comprend au moins une surface de contact (5) destinée à être en contact avec le module photovoltaïque (1), et au moins une conduite (6) pour au moins un fluide de refroidissement, laquelle conduite se trouve en contact thermique avec la surface de contact (5) et est de préférence tubulaire.

4. Ensemble selon l'une des revendications 1 à 3, **caractérisé en ce qu'**il comprend en outre au moins une couche intermédiaire (7), de préférence un gel et/ou une pâte et/ou un corps élastomère, laquelle couche est destinée à être interposée entre le corps de refroidissement (2) et le module photovoltaïque (1).

5. Agencement avec un module photovoltaïque (1), **caractérisé en ce que** l'agencement comprend au moins un ensemble selon l'une des revendications 1 à 4, et le corps de refroidissement (2) est tenu bloqué sur le module photovoltaïque (1) au moyen du dispositif de blocage (3).

6. Agencement selon la revendication 5, **caractérisé en ce que** le module photovoltaïque (1) comprend une face avant (8) prévue pour l'exposition à la lumière et, à l'opposé de celle-ci, une face arrière (9), le corps de refroidissement (2) étant disposé en contact thermique sur la face arrière (9) du module photovoltaïque (1).

7. Agencement selon la revendication 5 ou 6, **caractérisé en ce que** le dispositif de blocage (3) est fixé sur le module photovoltaïque (1) uniquement par blocage, de préférence sur un cadre (4) du module photovoltaïque (1).

8. Agencement selon l'une des revendications 5 à 7, **caractérisé en ce qu'**au moins une couche intermédiaire (7), de préférence une couche de gel et/ou une couche de pâte et/ou un corps en élastomère, est disposée entre le corps de refroidissement (2) et le module photovoltaïque (1), de préférence sur toute la surface.

9. Procédé pour de modification postérieure d'un module photovoltaïque (1), **caractérisé en ce que** sur le module photovoltaïque (1) et à l'aide d'un ensemble selon l'une des revendications 1 à 4, au moins un corps de refroidissement (2) est fixé par blocage sur le module photovoltaïque (1) au moyen d'au moins un dispositif de blocage (3).
